Europäisches Patentamt

European Patent Office

Office européen des brevets

(11) Publication number: **0 173 093**
A2

# EUROPEAN PATENT APPLICATION

(21) Application number: 85109510.9

(51) Int. Cl.⁴: **G 01 K 1/02**

(22) Date of filing: 29.07.85

(30) Priority: 01.08.84 DE 3428394
18.07.85 DE 3525718

(43) Date of publication of application: 05.03.86
Bulletin 86/10

(84) Designated Contracting States: AT BE CH DE FR GB IT
LI LU NL SE

(71) Applicant: M.K. Juchheim GmbH & Co.,
Moltkestrasse 13-31, D-6400 Fulda (DE)
Applicant: TEXAS INSTRUMENTS DEUTSCHLAND
GMBH, Haggertystrasse 1, D-8050 Freising (DE)

(72) Inventor: Brenninger, Heinrich, Sonnenstrasse 13,
D-8051 Kranzberg (DE)
Inventor: Heinecke, Günter, Pfannenstiel 21,
D-8051 Langenbach (DE)
Inventor: Vilimek, Vaclav F., Meisenstrasse 1,
D-8311 Viecht (DE)
Inventor: Goldmann, Joachim, Havelstrasse 15,
D-6400 Fulda-Kohlhaus (DE)
Inventor: Schuchert, Winfried, Frankfurterstrasse 155,
D-6400 Fulda-Kohlhaus (DE)

(74) Representative: Schwepfinger, Karl-Heinz, Dipl.-Ing.,
Prinz, Leiser, Bunke & Partner Ernsbergerstrasse 19,
D-8000 München 60 (DE)

(54) Method for measuring the temperature of a medium and thermometer for carrying out the method.

(57) The invention relates to a method of measuring the temperature of a medium by means of an electrically operating temperature sensor whose measurement signal varies in accordance with an e function. In the method at equal time intervals apart three temperature measured values are detected. From the second and from the first temperature measured values a first difference is formed and from the third and from the second temperature measured values a second difference. If the differences formed are smaller than a predetermined limit value one of the detected temperature values is displayed as the temperature of the medium to be measured. If however the differences formed are greater than the predetermined limit value the temperature of the medium is determined using the detected temperature values by a single extrapolation. The thermometer for carrying out the method includes an evaluation circuit comprising a microprocessor (10) which interrogates the temperature sensor (5) during a measuring operation at equal intervals of time, stores the temperature values detected and from the stored temperature values determines the temperature of the medium and supplies it to a display unit (7).

# PRINZ, LEISER, BUNKE & PARTNER

Patentanwälte · European Patent Attorneys

Ernsbergerstraße 19 · 8000 München 60

0173093

M.K. Juchheim GmbH & Co.

Moltkestrasse 13-31

6400 Fulda

29. Juli 1985

TEXAS INSTRUMENTS DEUTSCHLAND GMBH

Haggertystrasse 1

8050 Freising

Our reference: T 3693 EP

*- 1 -*

---

Method for measuring the temperature of a medium and
thermometer for carrying out the method

---

The invention relates to a method for measuring the
temperature of a medium by means of an electrically operating temperature sensor whose measurement signal varies
in accordance with an e function, three temperature
measurement values being detected at equal intervals
of time apart. Furthermore, the invention relates to a
thermometer for carrying out the method.

The measurement of temperatures on an electrical basis
has recently become of increasing importance, in
particular now that temperature sensors with narrow
tolerances are available in reproduceable manner.
These are for example so called measuring resistors
with a thin resistance film whose resistance changes
as a function of the temperature. The current flowing
through such a measuring resistor, the magnitude of
which is in the milliamp range, is then a measure of
the temperature. PTC silicon temperature sensors
have proved particularly reliable and accurate in the
range between -50 and 150° C.

The media whose temperature are to be measured may be
solid bodies (contact measurement) or liquids and gases (immersion measurement). There is however a demand today in the field of manufacturing, refining and storing foodstuffs for so called insert thermometers, i.e. the medium to be measured is for example a pasty mass or a soft material such as meat, sausage, fruit or vegetable.

It is obvious that the temperature sensor does not always have the temperature of the medium; it may be that the temperature sensor at room temperature has just been brought into contact with a medium at substantially different temperature or that the temperature of the medium abruptly changes. It is known that the temperature sensor, in particular the measurement signals generated thereby, follow the actual temperatures with an appreciable delay depending on the time constant thereof. The temperature variation corresponds in all cases substantially to an e function as will be explained in detail in the description hereinafter with the aid of a graph.

The lagging of the measurement signals behind the actual temperature is however not only due to the time constant of the temperature sensor but also to the heat transfer from the medium to the temperature sensor. Thus, for example, the time constant of the temperature sensor depends on the mechanical structure thereof because as a rule the sensitive measuring resistor cannot be directly exposed to the medium but is accommodated in a protective tube with respect to which for electrical reasons it must also be insulated. An electrical insulator is however in most cases also a good thermal insulator.

Heat transfer from the medium to the temperature sensor is also dependent on several factors, which include the thermal conductivity and the mass transportation.

For example, it is clearly obvious that the protective
tube of the temperature sensor will assume the
temperature of meat far more rapidly than that of a
gas atmosphere at rest because the heat transfer also
serves to equalize the temperature of the temperature
sensor to which the material inevitably adheres.
All cases of this type may be represented mathematically
by an e function which has a time constant formed by
the system comprising the temperature sensor and the
medium whose temperature is to be determined.

With a good heat transfer from the medium (liquid) to
the temperature sensor it may be assumed that the
final temperature, the so called steady-state temperature, is reached after about 5 to 30 seconds.  Since
as a rule the reaching of the steady-state temperature
is not predictable the temperature sensor and the
evaluation circuit must be permenantly connected to
a current source to enable the temperature change and
the asymptotic approximation of the temperature to the
steady-state to be traced.  Although theoretically an
infinite duration of the process is associated with
the term "asymptotic approximation" it has been found
perfectly adequate in practice to wait for the time
in which 90% of the temperature rise takes place and
to determine the remainder by a correction factor.
However, even this procedure leads to the considerable
switch-on period of the thermometer so that the current
source (battery) is soon exhausted.  Moreover, the
steady-state temperature is indicated only after expiry
of a relatively long period of time after the start
of a measuring cycle.

From DE-OS 3,135,835 a temperature measuring method is known with the aid of which the temperature of a medium is to be displayed without having to wait until the sensor used for the temperature measurement has reached the temperature of the medium. In this known measuring method at three successive instants at equal intervals apart three temperature values are detected and using time constants depending on characteristics of the sensor and sensor envelope a corrected temperature value is calculated which is made up of the sum of the second temperature detected and a correction factor. The time constants, which cannot be exactly determined but represent empirical values, are incorporated into the calculation of the correction factor. In several successive measuring cycles consecutive further corrected temperature values are calculated and the calculated values are compared each time with the previously calculated value. The measurement is continued until at least six successive corrected temperature values do not differ from each other by more than 0.05°F. As soon as this is detected the measuring operation is stopped and the temperature determined displayed as the temperature to be measured. In this measuring method the measurements must always be carried out until the sensor temperature no longer changes appreciably, i.e. the sensor has already approximately reached the temperature of the surrounding medium. Experience shows however that this possibly takes several minutes so that the thermometer must accordingly remain in operation for several minutes as well in the determination of a temperature. The battery of the thermometer has therefore only a limited life and must therefore be replaced relatively soon by a new battery.

The problem underlying the invention is therefore to provide a method for temperature measurement which with the minimum possible loading of the battery permits an indication of the temperature to be measured very quickly after the start of the measurement. Furthermore, an electronic thermometer is to be provided for carrying out this method.

-5-

This problem is solved according to the invention in that from the second and from the first temperature measured value a first difference is formed and from the third and from the second temperature measured value a second difference and that when the differences formed are smaller than a predetermined limit value one of the detected temperature measured values is displayed as the temperature of the medium to be measured whereas when the differences formed are greater than the predetermined limit value the temperature of the medium is determined using the detected temperature measured values by a single extrapolation.

In the temperature measuring method it suffices in the limit case after starting the measuring operation to detect three temperature measured values and by a single extrapolation operation determine the desired temperature of the medium which the sensor would not assume until a substantially later time. If the sensor already has the temperature of the medium at the start of the measuring operation no extrapolation should be carried out because otherwise very large measuring errors could occur. This case is excluded by the formation in the method according to the invention of the temperature differences and their evaluation.

An advantageous further development of the method according to the invention resides in that prior to the extrapolation the second difference is substracted from the first difference and when the result of this subtraction is smaller than a second predetermined limit value with delay a further three temperature measured values are detected on which the evaluation is based instead of on the three firstly detected temperature measured values. In this further development a further case is excluded in which an extrapolation could lead to high measurement errors. This case
occurs when the temperature variation curve has an
almost linear path immediately after the measuring
operation, or because the measurement was carried out
on a curve having an inflection point, which can occur
whenever a plurality of cooperating thermal time constants
of the system medium-sensor exists. When using the
advantageous further development it is ensured that in
this case three further temperature measurement values
are detected from which an exact temperature value can then
be determined.

In the thermometer according to the invention the
display of the temperature determined can be retained
until the temperature of the medium changes.  Since
the duration of a measuring cycle is only about
250 milliseconds the current consumption is extremely
low.  To illustrate this, the following data are given
for the current consumption:

Current consumption during
a measurement phase:        approx. 1 milliamp

Current consumption during
the signal processing:      between 140 and 250 μA

Quiescent consumption of
the microprocessor including
the current consumption for
the display:                approx. 4 μA.

It results from this alone that due to the short
measuring operations an extremely reduced current
consumption is obtained which increases the life of
the battery by several powers of ten.  It is pointed
out here that present-day batteries are available
which when using the measuring method according to the
invention would have a life of 10 years.

-7-

The thermometer used for carrying out the method according to the invention is characterized according to the invention in that the evaluation circuit contains a microprocessor which interrogates the temperature sensor in a measuring operation at equal intervals of time, stores the temperature measured values thereby detected and from the stored temperature measured values determines the temperature of the medium and supplies it to the display unit.

A microprocessor suitable for use in the thermometer according to the invention is available under the designation TMS 7000 from Texas Instruments.

A system of memories belonging to the microprocessor contains the program for the time sequence of the measuring method, carrying out the computation operations, including the algorithm and supplying the result of the computation operations to the display unit.

By the use of the measuring method according to the invention the current consumption may be reduced in the manner indicated. Thus, a battery built into the housing has an extremely high life expectation of about 10 years, which also governs the life expectation of the thermometer as a whole. It must be remembered that replacement of the battery is not possible, or not easily possible, because following such a replacement

- 8 -

a new adjustment of the entire evaluation circuit is necessary which requires devices which are not usually in the possession of the user.

The electronic thermometer constructed according to the invention may be accommodated in a housing whose dimensions are about 90 mm x 38 mm x 20 mm so that the thermometer is an excellent pocket thermometer.

The particular advantage of such a small thermometer is due to the fact that it can be included for example with products of any kind on passing through certain temperature treatment apparatuses. For example, such a thermometer can remain with the goods to be monitored in refrigerating chambers or even be placed in deep-freezers in households to provide a continuous temperature check.

According to a further development of the invention it is particularly advantageous for the evaluation circuit to have a memory for the maximum temperature. For example, signals for each new temperature value are input into said memory when the temperature value exceeds the previously stored measured value. With a temperature equipped in this manner it is for example possible in refrigerating or freezing apparatuses to determine whether on power failure the upper limit temperature has been exceeded.

It is also particularly advantageous for the evaluation circuit to have a memory for the minimum temperature. With a thermometer equipped in this manner it is for example possible to determine in chemical processes whether the temperature has dropped below a predetermined lower limit in the monitoring period.

-9-

The maximum and the minimum values may be erased by
an erase key so that the thermometer is then ready
to detect new maximum or minimum values.

Such a thermometer may additionally contain a maximum
value memory whose contents cannot be erased by the
user.  It is possible in this manner for example to
determine whether the apparatus has been damaged by the
designed temperature being exceeded.  The maximum
temperature value which has thus occurred can be interrogated in the production works to determine for example
whether a case of incorrect use or one where the
guarantee applies is involved.

In addition to the rapid measurement and extrapolation
possibility described above used in the case of temperature
differences or temperature changes, the subject of the
invention is distinguished by a very low current
consumption.  After reaching the steady-state temperature
it is for example completely adequate to execute a
measuring cycle periodically at intervals of 30 seconds.
In such a case, in spite of permanent display the current
consumption is only about 60 mAh/year.  Changing from
the measuring cycles carried out periodically at long
intervals of time apart to a measuring cycle to be
performed immediately with extrapolation can for example
be initiated by actuating a control key.  On completion of
the extrapolation an automatic return is made to the
operating state in which measuring cycles are carried out
at large intervals of time, unless the program for a new
rapid measurement is called up.

The calling up of the extreme values can also be effected
by actuating the same control key, and said key can be
actuated for a varying time or a different number of times
to distinguish between desired functions.  For example,
by key depression with a duration of more than one second
the maximum temperature value can be requested whereas by actuating the key twice in each case for more than
one second the minimum temperature value can be
requested. By an appropriate flashing display in these
cases attention is drawn to the fact that the display is
of a memory value and not of the actual temperature.

By a further key actuation of predetermined duration the
device is returned to the condition of normal measurement
and simultaneously the memory contents are erased.

An example of embodiment of the subject of the invention
and its mode of operation will be explained hereinafter
in detail with the aid of Figures 1 to 5, wherein:

Figure 1    is a front view of the thermometer in the
            read position,

Figure 2    is a partially sectioned side view of the
            thermometer of Fig. 1,

Figure 3    is a plan view of the thermometer according
            to Figure 1,

Figure 4    is a block diagram of the circuit of the
            electronic thermometer according to the invention,

Figure 5    is a graphical illustration showing the variation
            of the measurement signal corresponding to the
            sensor temperature as a function of time in the
            case where the sensor at room temperature of
            about 20° C is introduced into a medium having
            a temperature to be measured between 75° C and
            100° C, and

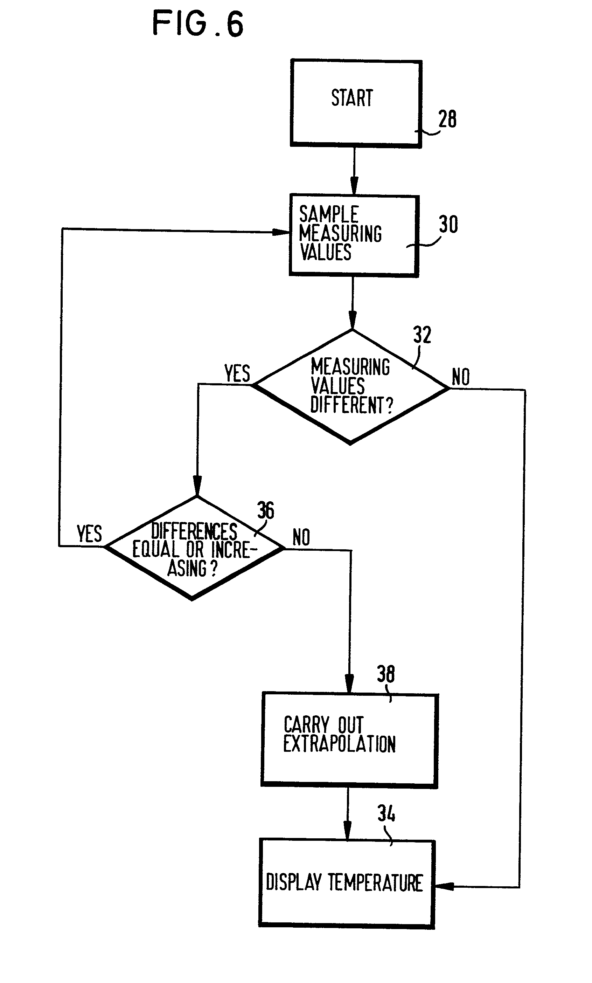

Figure 6   is a flow chart to explain the measuring
           method according to the invention.


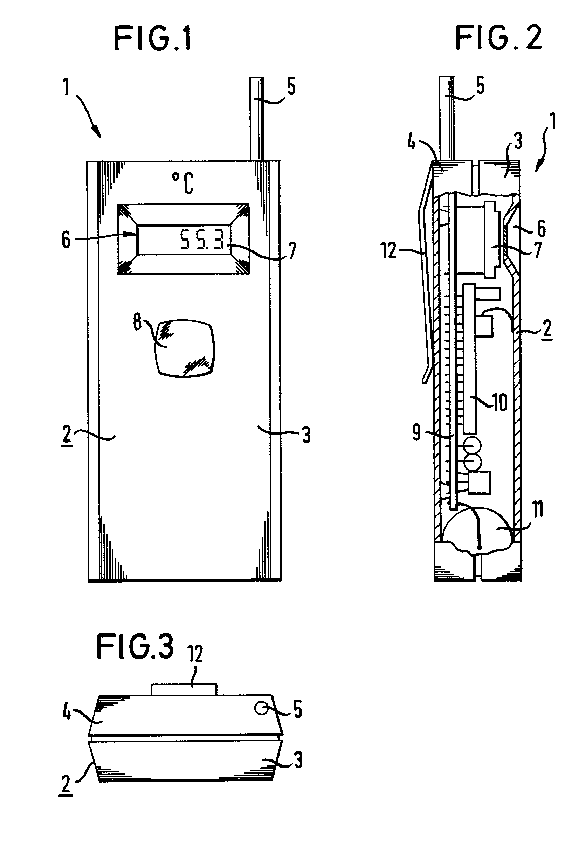

Figures 1 to 3 show an electronic thermometer 1 which is
constructed as pocket thermometer and housing 2 of which consists of two half dish-shaped housing members
3 and 4.  Projecting from the housing 2 is a temperature
sensor 5 whose portion visible from outside consists of
a protective tube of chromium-nickel steel.  It is for
example possible to accommodate in this protective tube
a PTC silicon temperature sensor of the type TSF202, TSU202,
TSF102 or TSU102.  The measurement range is between -50° C
and +150° C; the nominal resistance of the PTC sensor
depending on the type is 2000 ohms or 1000 ohms at 25° C.
Optionally, a platinium measuring resistance of type PT 1000
can also be connected.


Disposed in the front housing member 3 is an inspection
window 6 for a display unit 7 which is made as liquid
crystal display (LCD) with the dimensions 22m x 12 mm
with a digit height of 5 mm.  The display is with four
digits with a comma and other symbols activatable by the
program for the various measurement and display modes
described above.  Special symbols are also provided for
the display in degrees Celsius or Fahrenheit.  The
switching over in this case is done by the manufacturers
by means of a solder strap.  To initiate the executioning
of certain program functions a control key 8 is provided
which is disposed beneath the inspection window 6 and
constructed as foil key.


As apparent from Figure 2 in the interior of the housing
2 there is a printed circuit board 9 which carries the
electronic components of the thermometer 1 and in particular
a microprocessor 10.


For the current supply a lithium battery serves as current
source 11.  A battery preferred for this purpose is a
lithium battery having an output voltage of 3 V and a capacity of 1200 mAh which is sold under the designation
BR-2/3A-1P by the company National Panasonic. Such a
battery has a length of 35 mm with a diameter of 17 mm, i.e. can be accommodated in a very small space. For
reliable carrying of the thermometer 1 in a pocket a
clip 12 is secured to the back of the housing member 4.

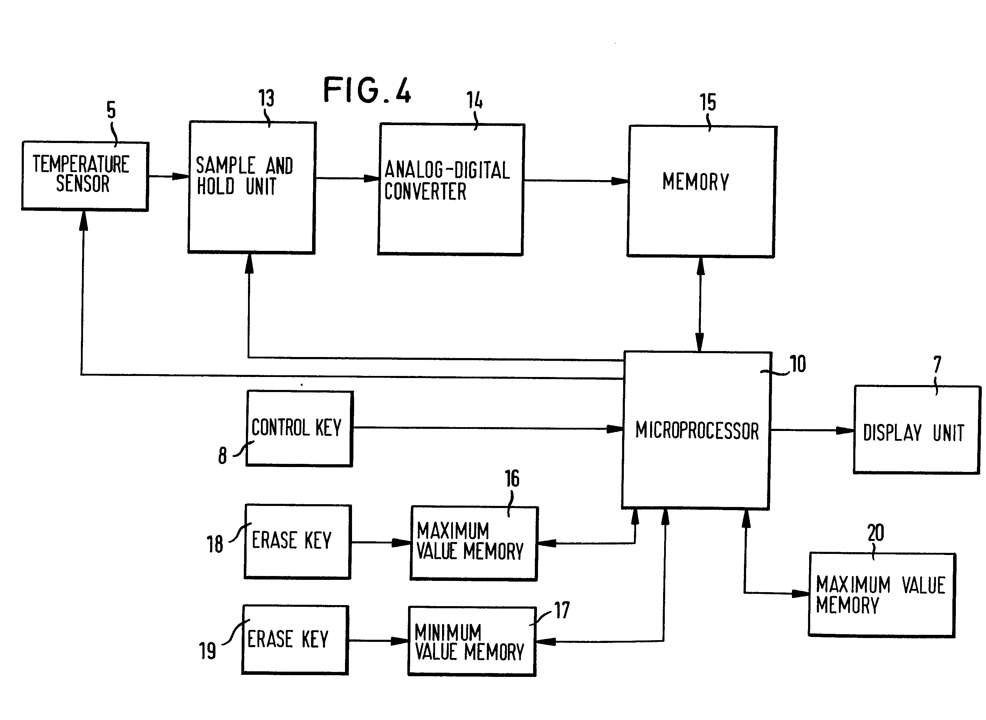

The block circuit diagram of Fig. 4 shows an example of
embodiment of an electronic circuit which can be used in
the thermometer of Fig. 1. The temperature sensor 5
is in connection with a sample and hold unit 13
which at instants controlled by the microprocessor 10
samples the measurement signal furnished by the temperature
sensor 5 and temporarily stores said signal. The
measurement signal of the temperature sensor 5 may for
example be a voltage which occurs thereat when a constant
current is passed therethrough. This voltage has a value
depending on the temperature. By means of an analog-digital
converter 14 the measurement signal value buffered in the
sample and hold unit can be converted to a digital
signal which can be stored in a memory 15. The microprocessor
10 has access to the memory 15 so that it can call up as
required the measurement signal values stored therein. As
mentioned, a measuring cycle can be initiated by actuating
the control key 8. Associated with the microprocessor 10
are a maximum value memory 16 and a minimum value memory
17. With the aid of erase keys 18 and 19 the contents
of the maximum value memory 16 and of the minimum value
memory 17 respectively can be erased. Also connected to
the microprocessor 10 is the display unit 7 by which the
temperature calculated by the microprocessor 10 in each
measuring cycle can be displayed.

When using the circuit illustrated in Fig. 4 a measuring
cycle runs as follows:

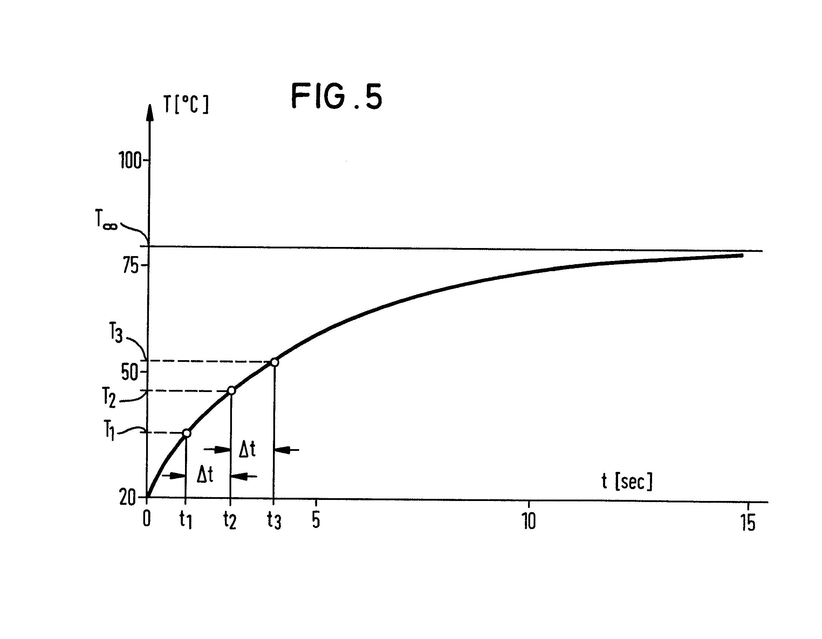

It will be assumed that the temperature of the temperature
sensor 5 is equal to an ambient temperature of 20° C. The
temperature of a medium substantially higher than the
ambient temperature is to be determined. In the diagram
of Fig. 5 it is assumed that the temperature to be measured is about 80° C. After the temperature sensor has been
brought into contact with the medium whose temperature
is to be measured the user presses the start key 8,
whereupon the microprocessor 10 sends for a short time
a constant current through the PTC sensor contained in
the temperature sensor 5. This constant current results
in a temperature drop which is a measure of the
temperature of the PTC sensor. The microprocessor 10
then causes the sample and hold unit 13 to sample
the voltage representing the measurement signal of the
temperature sensor 5 and to store it temporarily as the
first measurement signal value. The analog-digital
converter 14 converts the stored measurement signal
value to a digital signal which is stored at a first
storage location in the memory 15. Following this first
measuring phase for determining the first temperature
value $T_1$ there are two further measuring phases in
the course of which in the same manner a second temper-
ature value $T_2$ and a third temperature value $T_3$ are
detected and stored at two memory locations in the
memory 15. The following equations apply to the
measurement signal values:

$$T_1 = T_\infty (1 - e^{-\frac{t_1}{\tau}})$$

$$T_2 = T_\infty (1 - e^{-\frac{t_2}{\tau}})$$

$$T_3 = T_\infty (1 - e^{-\frac{t_3}{\tau}})$$

Because of the equal intervals of the measuring instants:

$$t_2 - t_1 = t_3 - t_2 = \Delta t.$$

-14-

This gives for the desired steady-state tempature $T_\infty$ :

$$T_\infty = \frac{T_1 \cdot T_3 - T_2^2}{T_3 + T_1 - 2T_2}$$

It is thus apparent that in the formula for the calculation of the steady-state temperature $T_\infty$ time constants are no longer contained. This means that the temperature $T_\infty$ to be measured can be determined very rapidly after detecting the three measured values $T_1$, $T_2$ and $T_3$ by extrapolation independently of the time constants, i.e. independently of the nature of the temperature sensor used and the nature of the particular medium.

Before the calculation of the steady-state temperature $T_\infty$ the microprocessor determines whether the three detected temperature values are equal or differ enough from each other. This determination can be made by forming the differences

$$\Delta_1 = T_2 - T_1$$

and

$$\Delta_2 = T_3 - T_2$$

and by comparison of the differences $\Delta_1$ and $\Delta_2$ with a limit value $G_1$. If the two differences are smaller than the predetermined limit value $G_1$ this means that the detected temperature values are almost equal. This case occurs in practice for example when the temperature sensor 5 has already been in contact for a long time with the medium whose temperature is to be measured and the control key 8 is then actuated.

-14-

-15-

The temperature sensor 5 then already has the temperature of the medium so that the successively detective temperature values differ from each other only very little or not at all and a direct temperature display can be made.  In this case no extrapolation using the above formula should be carried out because very large errors could result.  This is due to the fact that the expression $T_3 + T_1 - 2T_2$ tends to zero when the temperature values $T_1$, $T_2$ and $T_3$ are equal or almost equal so that in the extrapolation operation an inadmissible division by zero would occur. In this case it suffices to display in the display unit 7 the mean value of the temperature values detected or, if the limit value $G_1$ is made small enough, the last temperature value $T_3$ detected.

There is another case in which the application of the aforementioned formula for calculating the steady-state temperature $T_\infty$ can lead to great errors resulting from the fact that the detection of the temperature values is not possible with absolute accuracy.  When the temperature sensor 5 is brought into contact with the medium whose temperature is to be determined and the control key 8 is depressed, the curve representing the temperature variation of the temperature sensor 5 possibly has a path approximating to a greater or lesser degree to a linear variation or has an inflection point. If the three values $T_1$, $T_2$ and $T_3$ are detected in this region of the temperature variation curve it is possible that, because of measurement inaccuracies or because the measurement was carried out on a curve having an inflection point the differences $\Delta_1$ and $\Delta_2$ are of equal magnitude.
        In this case the formula given above for calculating the steady-state temperature $T_\infty$ would result in an inadmissible division by zero because in the formula the denominator assumes the value 0. In this case, to prevent an extrapolation for calculating the

- 15 -

-16-

steady-state temperature $T_\infty$ from being carried out before execution of the extrapolation a check is made to determine whether the difference $\Delta_2$ is more than a predetermined limit value $G_2$ smaller than the difference $\Delta_1$. If :

$$\Delta_1 - \Delta_2 < G_2$$

then this is an indication that the measurement was carried out on an almost linear portion of the temperature variation curve if the limit value $G_2$ was made adequately small. In this case, instead of performing an extrapolation after expiry of a time period of 2 to 3 seconds another measuring operation is carried out to detect the temperature values $T_1$, $T_2$ and $T_3$. The measured values then detected then lie with high probability in a region of the temperature variation curve which is not linear so that then either a direct display of the mean value of the temperature values detected is made or the last temperature value detected is displayed, or the extrapolation operation is carried out if the temperatures $T_1$, $T_2$ and $T_3$ differ enough from each other. Even if this delay of 2 to 3 seconds arises the steady-state temperature $T_\infty$ is obtained very quickly after depressing the control key 8, in particular a long time before the instant at which the sensor has in fact assumed the steady-state temperature $T_\infty$.

If however for the temperature differences $\Delta_1$ and $\Delta_2$ detected the relationship:

$$\Delta_1 - \Delta_2 > G_2$$

applies, this is an indication that the detected temperature values lie on an e-function portion of the temperature variation curve. In this case an extrapolation can immediately be made for determining the steady-state temperature $T_\infty$. In practice the steady-state temperature $T_\infty$ can in some cases be determined and displayed after only 1 second, depending on the type of sensor used.

With the aid of the flow chart illustrated in Fig. 6 the measuring method can be explained briefly and clearly as follows:

After the measuring operation has been started (block 28), in block 30 the temperature measured values $T_1$, $T_2$ and $T_3$ are detected. In block 32 it is determined whether the measured values differ enough from each other. If the measured values are almost identical, the display is made directly of one of the measured temperatures, preferably the last temperature detected, or of a temperature mean value, in block 34. If the measured values differ enough from each other a check is made in block 36 whether the detected temperature values lie on a linear portion of the temperature variation curve or on a curve having an inflection point. If using the above criteria the curve is found to increase exponentially, in the block 38 the steady-state temperature $T_\infty$ is determined by extrapolation and displayed in the block 37. If however the curve is found to be almost linear $(\Delta_2 = \Delta_1)$ or shows increasing differences (curve having an inflection point), after expiry of a predetermined waiting time three temperature measured values are again detected in the block 30. After checking in the block 32 whether the detected values last detected differ enough from each other, as above a direct temperature display is made or after execution of the linearity check in block 36, which then with certainty result in showing an exponential curve, an extrapolation operation is carried out for determining the steady-state temperature $T_\infty$.

-18-

After the steady-state temperature $T_\infty$ of the medium in which the temperature sensor 5 is disposed has been determined by extrapolation the microprocessor 10 supplies the result obtained to the display unit 7 so that the temperature calculated is displayed. The microprocessor 10 then passes automatically into a waiting state in the course of which at intervals of time which are large compared with the duration of a measuring cycle it carries out a measuring cycle of the type outlined and, if the temperature calculated differs from the displayed temperature, corrects the temperature value displayed by the display unit 7. The temperature calculated by the microprocessor 10 can also be input into a maximum value memory 16 when the calculated temperature is higher than the temperature already stored in the maximum value memory 16. In this manner, the maximum temperature detected in the course of several measuring cycles can be stored. In the same manner the temperature calculated can also be stored in the minimum value memory 17 whenever it is less than the temperature already stored previously in said memory. This makes it possible to store the minimum temperature detected in the course of several measuring cycles. With the aid of the erase keys 18 and 19 the maximum value memory 16 and the minimum value memory 17 can be erased if it is desired to store the extreme values of a future series of measuring cycles without reference to a previously executed series of measuring cycles.

The erase key 18 and the erase key 19 are shown in Fig. 4 as additional units to the control key 8. It is however readily possible to implement the functions of the erase keys 18 and 19 by the control key 8 in that the particular functions required, i.e. the initiation of a measuring cycle, the erasing of the maximum value memory and the erasing of the minimum value memory, are distinguished by the control key 8 being operated for different periods of time or a different number of times. The microprocessor 10 is able to recognize the nature of the actuation of the control key 8 and effect the various functions accordingly.

Also associated with the microprocessor 10 is the further maximum value memory 20 illustrated in Fig. 4 in which each calculated temperature which is higher than all previously measured temperature values is stored. This maximum value memory 20 cannot be erased and consequently it is possible to check with the aid of its contents whether the thermometer has been exposed to inadmissibly high temperature values. The manufacturer of the thermometer is therefore able to prove incorrect operation by the user which has led to failure.

Claims

1.  Method for measuring the temperature of a medium
by means of an electrically operating temperature sensor
whose measurement signal varies in accordance with an
e function, three temperature measurement values
being detected at equal intervals of time apart,
characterized in that from the second and from the
first temperature measured value a first difference is
 formed and from the third and from the second temperature measured value a second difference and that when
the differences formed are smaller than a predetermined
limit value one of the detected temperature measured
values is displayed as the temperature of the medium
to be measured whereas when the differences formed are
greater than the predetermined limit value the temperature of the medium is determined using the detected
temperature measured values by a single extrapolation.

2.  Method according to claim 1, characterized in that
prior to execution of the extrapolation the second
difference is subtracted from the first difference
and when the result of this subtraction is smaller
than a second predetermined limit value with delay a
further three temperature measured values are detected
on which the evaluation is based instead of on the
three firstly detected temperature measured values.

3.  Electronic thermometer for carrying out the method
according to claim 1 or 2, comprising a temperature
sensor, a display unit, an evaluation circuit for temperature measurement signals obtained from the sensor
and a current source for the evaluation circuit and
the display unit, characterized in that the evaluation
circuit comprises a microprocessor (10) which interrogates the temperature sensor (5) in a measuring operation

-1-

at equal intervals of time, stores the temperature measured values thereby detected and from the stored temperature measured values determines the temperature of the medium and supplies it to the display unit (7).

4. Thermometer according to claim 3, characterized in that the microprocessor (10) determines the temperature of the medium by a single extrapolation.

5. Thermometer according to claim 3 or 4, characterized by a control key (8) for initiating a measuring cycle.

6. Thermometer according to claim 4, 5 or 6, characterized in that the microprocessor automatically periodically initiates the execution of a measuring cycle at time intervals which are very long in comparison with the duration of a measuring cycle.

7. Thermometer according to any one of claims 4 and 6, characterized by an erasable memory (16) for storing a maximum temperature.

8. Thermometer according to any one of claims 4 to 7, characterized by a non-erasable memory (20) for a maximum temperature.

9. Thermometer according to any one of claims 4 to 8, characterized by an erasable memory (17) for a minimum temperature.

# FIG.1

°C

55.3

# FIG.2

# FIG.3

# FIG.4

TEMPERATURE SENSOR — 5

SAMPLE AND HOLD UNIT — 13

ANALOG-DIGITAL CONVERTER — 14

MEMORY — 15

CONTROL KEY — 8

MICROPROCESSOR — 10

DISPLAY UNIT — 7

ERASE KEY — 18

MAXIMUM VALUE MEMORY — 16

ERASE KEY — 19

MINIMUM VALUE MEMORY — 17

MAXIMUM VALUE MEMORY — 20

0173093

FIG.5

0173093

## FIG.6